# EUROPÄISCHE PATENTSCHRIFT

(11) **EP 3 253 645 B1**
(45) Veröffentlichungstag und Bekanntmachung des Hinweises auf die Patenterteilung: **26.08.2020**
(21) Anmeldenummer: 16703287.9
(22) Anmeldetag: 04.02.2016
(51) Int. Cl.: B62D 13/04, B62D 7/14

(54) **LENKSTABILISIERUNG**
STEERING STABILIZING MEANS
STABILISATION DE DIRECTION

(30) Priorität: 06.02.2015 DE 102015202191
(43) Veröffentlichungstag der Anmeldung: 13.12.2017
(73) Patentinhaber: SAF-HOLLAND GmbH, 63856 Bessenbach (DE)
(72) Erfinder: KHOURY, Jean, 63303 Dreieich (DE)
(74) Vertreter: Müller Schupfner & Partner Patent- und Rechtsanwaltspartnerschaft mbB
(86) Internationale Anmeldenummer: PCT/EP2016/052324
(87) Internationale Veröffentlichungsnummer: WO 2016/124662

(56) Entgegenhaltungen:
- DE-A1- 19 654 241
- DE-A1-102012 025 604
- DE-A1-102012 209 690
- DE-U1-202007 015 502
- US-A- 1 868 912
- US-A1- 2004 000 772
- US-B1- 6 422 582

## Beschreibung

Die vorliegende Erfindung betrifft eine Lenkstabilisierung sowie eine Betätigungseinheit zum Einsatz als Lenkstabilisierung.

Im Bereich der Nutzfahrzeuge hat sich der Einsatz von Nachlauflenkachsen, insbesondere bei mehrachsigen Anhängern für Nutzfahrzeuge, weitestgehend durchgesetzt. Durch die Nachlauflenkachsen kann der Reifenverschleiss bei der Kurvenfahrt eines mehrachsigen Nutzfahrzeuges oder Nutzfahrzeuganhängers deutlich reduziert und dessen Manoevrierbarkeit verbessert werden. Aufgrund ihrer einfachen Herstellung und der einfachen Handhabung, kommen bei Anhängern für Nutzfahrzeuge insbesondere ungelenkte Nachlauflenkachsen zum Einsatz, das heißt, dass keine aktive Steuerung der Lenkbewegungen der Nachlauflenkachse erforderlich ist. Diese Nachlauflenkachsen werden auf einfache Weise durch die an dem Reifen des Rades wirkenden Seitenkräfte in die entsprechend richtige Lenkstellung gebracht. Man nennt dies auch "reibungsgelenkte Achse". Derartige reibungsgelenkte Achsen brauchen insbesondere bei schneller Geradeausfahrt ein Stabilisierungssystem, damit sie nicht ungewollt in Schwingung geraten und die Sicherheit der Geradeausfahrt des Nutzfahrzeuges gefährden. Solche Lenkstabilisierungssysteme haben zum einen die Funktion, die Lenkschenkel der Nachlauflenkachse wieder in Geradeaus-Stellung zu bringen und zum anderen vorzugsweise schnelle Drehbewegung des Lenkschenkels zu dämpfen. Aus dem Stand der Technik sind bisher nur Systeme bekannt, bei welchen die Rückstellungs- und Dämpfungsfunktion durch eine Vielzahl verschiedener Elemente, welche im Bereich des Fahrwerks des Nutzfahrzeuges angebracht werden müssen, verwirklicht wird. Dies beansprucht einen sehr großen Bauraum verbunden mit einem hohen Gewicht der verschiedenen Teilsysteme, die die Rückstellung und Dämpfung der Nachlauflenkachse übernehmen. Außerdem ist auch der Montage- und Wartungsaufwand durch die verschiedenen Dämpfungs- und Rückstellsysteme sehr aufwändig.

Die DE 10 2012 209 690 A1 die den Oberbegriff der Ansprüche 1 und 12 offenbart, und die DE 10 2012 025 604 A1 offenbaren eine Lenkanordnung für Nutzfahrzeuge, bei welcher eine Betätigungseinheit vorgesehen ist, welche mittels eines Rückstellteils, eines Aktivteils und eines Dämpfteils eine Kraft auf eine durch die Betätigungseinheit hindurch laufende Spurstange überträgt.

Die DE 20 2007 015 502 U1 offenbart einen Stabilisator für eine nachlaufgelenkte Achse, wobei die Achse einen Achskörper und eine Spurstange umfasst, wobei der Stabilisator zwischen Achskörper und Spurstange angeordnet ist und durch den Stabilisator bei einer Auslenkung der Spurstange aus einer Ruhelage relativ zum Achskörper eine Rückstellkraft auf die Spurstange übertragen wird.

Die DE 196 54 241 A1 zeigt Verfahren für die Nachlenkung der hinteren Achsen bei mehrachsigen Fahrzeugen und Sattelschleppern, bei welchem die Räder an diesen Achsen so gelenkt werden, dass sie in Richtung der Tangentenvektoren der jeweiligen Wendekreise rollen.

Die US 2004/0000772 A1 betrifft eine Lenkanordnung mit einer Spurstange welche innerhalb eines Zylinders angeordnet ist und mit einer Rückstellkraft und einer Betätigungskraft beaufschlagt wird.

Die US 6,422,582 B1 offenbart eine Betätigungseinheit zum Einsatz in einer Lenkstabilisierung und eine Lenkstabilisierung.

Aufgabe der vorliegenden Erfindung ist es, eine Lenkstabilisierung bereit zu stellen, welche die im Stand der Technik auftretenden Probleme löst, und insbesondere eine Vereinfachung, eine Bauraumersparnis und eine Gewichtsreduzierung des Fahrwerks des Nutzfahrzeuges ermöglicht.

Diese Aufgabe wird gelöst mit einer Betätigungseinheit gemäß Anspruch 1 sowie einer Lenkstabilisierung gemäß Anspruch 12. Weitere Vorteile und Merkmale der vorliegenden Erfindung ergeben sich aus den abhängigen Ansprüchen. Erfindungsgemäß umfasst die Betätigungseinheit ein Gehäuse, ein erstes Übertragungselement und ein zweites Übertragungselement, wobei das erste Übertragungselement und das zweite Übertragungselement von außen in das Gehäuse hineinragen und entlang einer Rückstellachse verlagerbar sind, wobei das erste Übertragungselement an seinem ersten Ende an einem ersten Druckelement angreift und wobei das zweite Übertragungselement an seinem ersten Ende an einem (zum ersten Druckelement separaten) zweiten Druckelement angreift, wobei das erste Druckelement und das zweite Druckelement innerhalb des Gehäuses angeordnet sind und von einem Rückstellmittel mit einer entlang der Rückstellachse wirkenden Rückstellkraft beaufschlagt sind. Die Betätigungseinheit ist vorzugsweise als in zwei Richtungen wirkende Druckzylinder ausgelegt, wobei das erste Übertragungselement und das zweite Übertragungselement vorzugsweise als die entsprechenden Druckübertragungs- bzw. Kraftübertragungselemente des Zylinders angesehen werden können. Das Gehäuse der Betätigungseinheit ist vorzugsweise ortsfest zu einem Achselement des Fahrwerks des Nutzfahrzeuges angeordnet. Das Gehäuse der Betätigungseinheit ist vorzugsweise im Wesentlichen oder größtenteils zylinderförmig und hohlkörperförmig ausgebildet, wobei das erste Übertragungselement bevorzugt auf einer ersten Stirnseite des hohlzylinderförmig ausgebildeten Gehäuses in dieses hineinragt und das zweite Übertragungselement auf der entsprechend gegenüberliegenden Stirnseite in das Gehäuse hineinragt. Das Gehäuse weist hierfür vorzugsweise entsprechende Öffnungen auf, welche besonders bevorzugt in ihrem Öffnungsquerschnitt an die jeweilige Außengeometrie der entsprechenden Abschnitte des ersten und zweiten Übertragungselements, welche durch die Öffnung hindurchgesteckt sind, angepasst sind. An ihrem im Gehäuse befindlichen ersten Ende weisen das erste Übertragungselement und das zweite Übertragungselement jeweils ein Druckelement auf bzw. stehen mit diesen in Kontakt oder Eingriff, welches erfindungsgemäß vollständig im Inneren des Gehäuses angeordnet ist. Bevorzugt kann dabei das erste Übertragungselement gegen Transversalbewegung relativ zum ersten Druckelement am ersten Druckelement festgelegt und dabei aber im gewissen Umfang schwenkbar zum ersten Druckelement sein. Analog hierzu ist das zweite Übertragungselement vorzugsweise gegen Transversalbewegung insbesondere längs der Rückstellachse gesichert und in einem bestimmten Winkelbereich verschwenkbar am zweiten Druckelement festgelegt. Durch die Verschwenkbarkeit des ersten Übertragungselements und des zweiten Übertragungselements an dem jeweiligen Druckelement kann insbesondere erreicht werden, dass bei leichter Pendelbewegung der Übertragungselemente in Verbindung mit weiteren Systemen des Fahrwerkes, insbesondere der Lenkstange, diese Bewegung ausgeglichen wird und es nicht zu einem Verkanten der Druckelemente im Gehäuse der Betätigungseinheit kommt. Im Inneren des Gehäuses der Betätigungseinheit ist weiterhin ein Rückstellmittel angeordnet, welches auf die beiden Druckelemente wirkt, um diese voneinander zu beabstanden. Die vom Rückstellmittel auf die Druckelemente übertragene Kraft wirkt dabei im Wesentlichen längs einer Rückstellachse. In einem besonders bevorzugten Fall, wenn das erste Druckelement gemeinsam mit dem ersten Übertragungselement entlang der Rückstellachse in das Gehäuse der Betätigungseinheit hinein verlagert wird, beaufschlagt das Rückstellmittel das erste Druckelement mit einer entgegen dieser Verlagerungsrichtung wirkenden Kraft, um das erste Druckelement und das erste Übertragungselement wieder in Richtung der Stirnseite des Gehäuses zu verlagern. Diese Funktion des Rückstellmittels dient insbesondere der Rückstellung einer Lenkung eines Nutzfahrzeuges in die Neutral- oder Ruhelage. Das Rückstellmittel stützt sich dabei jeweils an dem gegenüberliegenden Druckelement ab, welches sich seinerseits an der Innenwand im Bereich der Stirnseite des Gehäuses abstützt.

In einer bevorzugten Ausführungsform steht das Rückstellmittel unter Vorspannung, um das erste Druckelement vom zweiten Druckelement zu beabstanden, wobei sich zumindest eines der Übertragungselemente und/oder Druckelemente an dem Gehäuse und/oder einem im Wesentlichen ortsfest zum Gehäuse angeordneten Anschlag abstützt. Um stets dafür zu sorgen, dass die Betätigungseinheit die Nachlauflenkachse in eine neutrale Stellung, das heißt mit anderen Worten die Geradeausfahrstellung, bringt, ist es bevorzugt, dass das Rückstellmittel im Gehäuse unter Vorspannung angeordnet ist. Dabei presst das Rückstellmittel in einer Ruhelage der Betätigungseinheit das erste Druckelement und das zweite Druckelement jeweils in Richtung der an der Stirnseite des Gehäuses liegenden Innenwände des Gehäuses. In jedem Betriebszustand der Betätigungseinheit stützt sich vorzugsweis zumindest ein Druckelement an einer Innenwand des Gehäuses ab. Alternativ bevorzugt stützt sich eines der Druckelemente an dem benachbarten Übertragungselement ab, welches sich seinerseits mit einer Eingriffsgeometrie an einem Anschlag abstützt. Der Anschlag ist vorzugsweise an dem Gehäuse oder einem ortsfest zum Gehäuse angeordneten Bauteil des Fahrwerkes vorgesehen. Der Anschlag und/oder die Innenwand des Gehäuses begrenzen somit mit Vorteil die Verlagerbarkeit des Verbundes aus Druckelement und Übertragungselement in jeweils der ersten oder der zweiten Richtung.

Vorzugsweise umfasst das Rückstellmittel ein Federelement und/oder ein Fluid. Vorteil eines Federelements, bevorzugt als Spiralfeder ausgebildet, welche zwischen dem ersten Druckelement und dem zweiten Druckelement angeordnet ist und sich an diesem abstützt, ist, dass auch bei einer Systemstörung der pneumatischen Anlage des Nutzfahrzeuges eine Rückstellkraft auf das erste und/oder das zweite Druckelement und die jeweils verbundenen Übertragungselemente ausgeübt wird, um die Nachlauflenkachse in die entsprechende Geradeausfahrstellung zu bringen. Das Fluid ist vorzugsweise ein kompressibles Fluid wie z.B. Druckluft. Der Vorteil des Einsatzes eines Fluids ist, dass zum einen die effektive Rückstellkraft angepasst werden kann und zum anderen das Gewicht der Betätigungseinheit verringert ist. Je nach Anforderung an die Betätigungseinheit ist es somit möglich im Rahmen der vorliegenden Erfindung bei höherem Sicherheitserfordernis ein Federelement als Rückstellmittel einzusetzen und bei besonders hohen Anforderungen an die Gewichtsersparnis ausschließlich ein Fluid wie beispielsweise Druckluft als Rückstellmittel einzusetzen. In einer besonders bevorzugten Ausführungsform können auch ein Federelement und ein Fluid in Kombination als Rückstellmittel zum Einsatz gelangen, welche beide im Inneren des Gehäuses angeordnet sind und gleichzeitig auf das erste Druckelement und das zweite Druckelement einwirken. Dabei kann das Federelement entsprechend unterdimensioniert sein, um nur bei Ausfall der pneumatischen Anlage einer Mindestrückstellkraft bereit zu stellen, während im normalem Betrieb des Nutzfahrzeuges der Hauptteil der Rückstellkraft von dem Fluid aufgebracht wird. Als Fluid kann auch Hydraulikflüssigkeit eingesetzt werden, welche in einem entsprechenden Hydrauliksystem bei gleichem Druck im Gehäuse der Betätigungseinheit sowie im entsprechenden Hydrauliksystem des Nutzfahrzeuges gespeichert ist. Hydraulikflüssigkeit weist eine bevorzugte im Vergleich zu Luft hohe Fluidreibung beim Durchströmen von Blenden und Ventilen auf, welche eine verbesserte Dämpfung von Bewegungen ermöglicht.

Bevorzugt weist das erste Übertragungselement einen ersten Eingriffsabschnitt auf, welcher außerhalb des Gehäuses angeordnet und ausgelegt ist, eine Kraft an eine Lenkstange entlang der Rückstellachse in einer ersten Richtung zu übertragen, wobei das zweite Übertragungselement einen zweiten Eingriffsabschnitt aufweist, welcher außerhalb des Gehäuses angeordnet und ausgelegt ist, eine Kraft an die Lenkstange entlang der Rückstellachse in einer zweiten Richtung zu übertragen. Der erste und der zweite Eingriffsabschnitt sind vorzugsweise an dem jeweiligen Übertragungselement festgelegte Elemente oder einstückig mit den Übertragungselementen ausgeführte Vorsprünge, welche dazu geeignet sind, in jeweils zumindest einer Richtung eine Kraft indirekt oder direkt auf eine Lenkstange zu übertragen. Vorzugsweise überträgt dabei der erste Eingriffsabschnitt eine Kraft nur entlang einer ersten Richtung. Der zweite Eingriffsabschnitt überträgt vorzugsweise eine Kraft auf die Lenkstange nur in einer zweiten Richtung. Die erste und die zweite Richtung verlaufen dabei bevorzugt beide parallel zur Rückstellachse und entgegengesetzt zueinander. Mit anderen Worten ist der erste Eingriffsabschnitt dafür ausgelegt, bei Verlagerung der Lenkstange entgegen der ersten Richtung das erste Übertragungselement und somit das Druckelement gegen das Rückstellmittel zu drücken bzw. pressen und somit eine Rückstellkraft vom Rückstellmittel in Richtung der Lenkstange zu übertragen. Analog hierzu ist der zweite Eingriffsabschnitt dafür ausgelegt, eine Verlagerungsbewegung der Lenkstange entgegen der zweiten Richtung an das zweite Übertragungselement und das Druckelement zu übertragen und somit eine Rückstellkraft des Rückstellmittels in der zweiten Richtung an die Lenkstange zu übertragen. Je nachdem in welche Richtung entlang der Rückstellachse sich die Lenkstange relativ zum Gehäuse der Betätigungseinheit also verlagert, überträgt vorzugsweise entweder der erste Eingriffsabschnitt oder der zweite Eingriffsabschnitt eine entsprechende Rückstellkraft von dem Rückstellmittel über das Druckelement und das entsprechende Übertragungselement an die Lenkstange.

Bevorzugt ist der erste Eingriffsabschnitt ausgelegt entgegen der ersten Richtung keine Kraft an die Lenkstange zu übertragen, und/oder bevorzugt ist der zweite Eingriffsabschnitt ausgelegt, entgegen der zweiten Richtung keine Kraft an die Lenkstange zu übertragen. Mit anderen Worten kann sich die Lenkstange oder ein an der Lenkstange entsprechend vorgesehenes Adapter- oder Kraftübertragungselement in der erste Richtung frei zum ersten Übertragungselement bewegen. Ebenso kann sich die Lenkstange oder das entsprechend an der Lenkstange vorgesehene Adapterelement in der zweiten Richtung frei zum zweiten Übertragungselement bewegen. Diese Auslegung des ersten und des zweiten Eingriffsabschnitts sorgt dafür, dass bei einem Lenkausschlag der Lenkstange entlang der ersten Richtung nur der zweite Eingriffsabschnitt eine Kraft überträgt und bei einem Ausschlag der Lenkstange in der zweiten Richtung nur der erste Eingriffsabschnitt eine entsprechende Rückstellkraft an die Lenkstange überträgt. Es versteht sich in diesem Zusammenhang, dass die erste und die zweite Richtung jeweils in Bezug auf eine Relativbewegung relativ zum Gehäuse der Betätigungseinheit definiert sind.

Ferner bevorzugt ist die Position des ersten und/oder des zweiten Eingriffsabschnitts an dem jeweiligen Übertragungselement einstellbar und vorzugsweise form- und/oder kraftschlüssig festlegbar. Durch die Einstellbarkeit der Position des ersten und/oder des zweiten Eingriffsabschnitts an dem jeweiligen Übertragungselement, kann die Betätigungseinheit entsprechend der Geometrie des Nutzfahrzeugfahrwerkes und eventuell auftretende Toleranzen justiert werden. In einer ersten bevorzugten Ausführungsform weisen die Übertragungselemente vorzugsweise ein Außengewinde auf, auf welches der jeweils korrespondierende Eingriffsabschnitt, welcher beispielsweise ein Innengewinde und eine entsprechende Kontermutter umfasst, aufgeschraubt werden und in einer bestimmten Position form- und kraftschlüssig festgelegt werden kann. In einer alternativ bevorzugten Ausführungsform sind die Eingriffsabschnitte als Schellen ausgebildet, welche über ein Klemmelement an dem jeweiligen Übertragungselement festgeklemmt werden können. Insbesondere bevorzugt können an den Übertragungselementen entsprechende Vorsprünge vorgesehen sein, welche bevorzugte Befestigungspositionen zur Festlegung der Eingriffsabschnitte markieren und eine formschlüssige Positionierung der Eingriffsabschnitte an den Übertragungselementen gewährleisten und gleichzeitig einen einfachen Zusammenbau der Betätigungseinheit ermöglichen.

Insbesondere bevorzugt ist im Gehäuse der Betätigungseinheit eine Kammer gebildet, wobei das erste Druckelement die Kammer in ein erstes Volumen und ein zweites Volumen teilt, wobei das zweite Druckelement die Kammer in das erste Volumen und ein drittes Volumen teilt. Die Kammer ist bevorzugt ein im Inneren des Gehäuses gebildeter Hohlraum, in welchem das erste Druckelement und das zweite Druckelement angeordnet sind. Vorzugsweise sind das erste und zweite Druckelement dabei derart in der Kammer angeordnet und ausgelegt, dass sie die Kammer in ein erstes, ein zweites und ein drittes Volumen teilen, wobei das erste Volumen, das zweite Volumen und das dritte Volumen im Wesentlichen fluiddicht voneinander getrennt sind. Im Wesentlichen fluiddicht heißt, dass, abgesehen von Spalttoleranzen zwischen der Innenwand der Kammer und dem entsprechenden Druckelement und von gegebenenfalls im Druckelement vorgesehenen Fluiddämpfungsventilen, kein Fluid am ersten oder zweiten Druckelement vorbei vom ersten Volumen in das zweite oder dritte Volumen und umgekehrt strömen kann. Mit anderen Worten fungieren das erste Druckelement und das zweite Druckelement vorzugsweise als Kolben zwischen denen das erste Volumen angeordnet ist und welche bei einer Verlagerung aufeinander zu jeweils ein zweites oder ein drittes Volumen, auf der dem ersten Volumen abgewandten Seite der Druckelemente freigeben.

Insbesondere bevorzugt herrscht dabei im Betrieb der Betätigungseinheit im ersten Volumen ein höherer Druck als im zweiten Volumen und im dritten Volumen. Insbesondere in dem Fall, in welchem als Rückstellmittel ein Fluid eingesetzt wird, ist es vorgesehen, dass im ersten Volumen ein höherer Druck herrscht als im zweiten Volumen und im dritten Volumen. Auf diese Weise kann der Druckunterschied zwischen dem ersten Volumen und dem zweiten Volumen bzw. zwischen dem ersten Volumen und dem dritten Volumen eine entsprechende Rückstellkraft auf das Druckelement übertragen.

Besonders bevorzugt herrscht im Betrieb der Betätigungseinheit im zweiten Volumen und/oder im dritten Volumen Umgebungsluftdruck. Um im Betrieb der Betätigungseinheit den entsprechend bevorzugten Druckunterschied zwischen erstem Volumen und zweitem Volumen bzw. dritten Volumen zu gewährleisten, ist im zweiten und/oder im dritten Volumen vorzugsweise der Umgebungsluftdruck vorgesehen. Der Umgebungsluftdruck kann dabei durch entsprechende Bohrungen an den Stirnseiten des Gehäuses in das zweite Volumen und/oder das dritte Volumen geleitet werden. Der im ersten Volumen vorherrschende Druck ist somit vorzugsweise höher als der Umgebungsluftdruck. Die Zu- und Abströmung von Umgebungsluft in das zweite Volumen und/oder das dritte Volumen kann dabei vorzugsweise auch im Bereich der Öffnungen in der Gehäusewand, durch welche das erste Übertragungselement und das zweite Übertragungselement hindurch reichen, gewährleistet werden.

In einer bevorzugten Ausführungsform weist das erste Druckelement eine erste Membran und/oder das zweite Druckelement eine zweite Membran auf, wobei die erste Membran und/oder die zweite Membran fluiddicht an der Innenwand der Kammer des Gehäuses angeordnet oder festgelegt ist/sind. Alternativ zur Auslegung der Druckelemente als Kolben, welche in der Kammer des Gehäuses vorgesehen sind, können die Druckelemente auch Membranen umfassen, welche vorzugsweise formschlüssig oder kraftschlüssig an der Innenwand des Gehäuses bzw. an der Innenwand der Kammer festgelegt sind. Durch den Einsatz von Membranen lässt sich insbesondere Reibungsverschleiß vermeiden, der bei Kolben, welche an der Innenwand der Kammer entlang gleiten und somit reiben, auftritt. Weiterhin bevorzugt ist über eine Membran eine höhere Fluiddichtigkeit erzielbar als bei einem in einem Zylinder gleitenden Kolben. Die Betätigungseinheit ist somit vorzugsweise als doppelt wirkender Membranzylinder ausgelegt. Das Gehäuse der Betätigungseinheit kann vorzugsweise aus einer Vielzahl von Segmenten ausgebildet sein, wobei jeweils im Grenzbereich zweier Segmente, in dem diese aneinander stoßen, eine Membran festgelegt, vorzugsweise eingeklemmt werden kann.

Weiterhin bevorzugt weist das Gehäuse einen Einlass zum Einleiten eines Fluids in die Kammer, insbesondere deren erstes Volumen auf. Als Einlass ist dabei vorzugsweise ein Stutzen zum Anschluss einer Druckleitung vorgesehen, welcher ein Außengewinde aufweist und welcher möglichst mit den üblicherweise an Nutzfahrzeugen verwendeten Pneumatik-Druckleitungen kompatibel ist. Alternativ bevorzugt kann der Einlass auch als entsprechende Bohrung ausgebildet und mit einem Innengewinde oder einem Bajonett-Anschluss versehen sein, um die entsprechende Druckleitung besonders einfach und sicher an dem Gehäuse festzulegen. Insbesondere bevorzugt ist die Druckleitung dabei mit dem Luftbalg einer Luftfeder des Nutzfahrzeuges fluidtechnisch verbunden, wobei insbesondere eine Anpassung des Luftdrucks in dem ersten Volumen der Kammer an das Gewicht des Nutzfahrzeuges, respektive an die auf die Luftfeder wirkende Gewichtskraft angepasst werden kann. Dies ist insbesondere bevorzugt, da üblicherweise bei höherem Gewicht des Nutzfahrzeuges auch eine höhere Rückstellkraft zur Überwindung der Reibungskraft der Reifen auf dem Boden benötigt wird, wobei diese erhöhte Rückstellkraft durch einen höheren Druck im ersten Volumen der Betätigungseinheit erreicht werden kann.

Ferner bevorzugt weist das erste Druckelement und das zweite Druckelement einen Stützabschnitt auf, wobei sich das vorzugsweise als Federelement ausgebildete Rückstellelement an beiden Stützabschnitten abstützt. Bevorzugt sind die Stützabschnitte am ersten Druckelement und am zweiten Druckelement als Federteller ausgebildet, welche ein Entgleiten bzw. Abrutschen des als Federelement ausgebildeten Rückstellmittels in einer Richtung quer zur Rückstellachse verhindern. Vorzugsweise sind die Stützabschnitte als zusätzliche Bauteile an den Druckelementen vorgesehen, beispielsweise als scheibenförmiges Element mit in Richtung des Rückstellmittels hervorragendem Rand, welches an dem Druckelement über ein Bolzen oder eine Schraube oder eine Niete festgelegt ist.

Weiterhin erfindungsgemäß ist eine Lenkstabilisierung insbesondere für ein Nutzfahrzeug vorgesehen, umfassend eine Betätigungseinheit, eine Lenkstange und zwei Streben, wobei die Betätigungseinheit ein Gehäuse aufweist, welches ortsfest zu einem Achselement angeordnet ist, wobei die Betätigungseinheit ausgelegt ist in einer Ruhelage der Lenkstange relativ zum Achselement, beide Streben mit dem gleichen Betrag einer Kraft zu beaufschlagen, wobei die Betätigungseinheit ausgelegt ist, bei Auslenkung der Lenkstange aus der Ruhelage parallel zu einer Rückstellachse, auf eine der Streben eine höhere Kraft zu übertragen als auf die jeweils andere Strebe. Die erfindungsgemäße Lenkstabilisierung ist vorzugsweise Teil einer Nachlauflenkachse, bei welcher eine Lenkstange die jeweiligen Lenkbewegungen der beiden Radaufhängungen synchronisiert und sich entsprechend im Wesentlichen parallel zu einer Rückstellachse relativ zu einem Achselement verlagert. Im Wesentlichen parallel zur Rückstellachse bedeutet im vorliegenden Fall, dass die Lenkstange aufgrund der Kreisbahn, welche ihre Anbindungspunkte an die jeweiligen Hebel in den Radaufhängungen beschreiben, auch eine Verlagerung quer zur Rückstellachse ausführt, wobei es im Fall der vorliegenden Erfindung jedoch lediglich auf die Bewegung parallel zur Rückstellachse ankommt. Die Betätigungseinheit weist ein Gehäuse auf, welches vorzugsweise über entsprechende Verbindungsmittel wie Stege und/oder Bolzen an einem Achselement oder indirekt an einem Achselement festgelegt ist. Überträgt dabei eine erste Strebe eine Rückstellkraft von der Betätigungseinheit in einer ersten Richtung parallel zur Rückstellachse an die Lenkstange. Die zweite Strebe der Lenkstabilisierung ist dafür ausgelegt, eine Rückstellkraft entlang einer zweiten Richtung von der Betätigungseinheit an die Lenkstange zu übertragen. Die Streben erstrecken sich vorzugsweise im Wesentlichen quer und besonders bevorzugt im Wesentlichen senkrecht zur Rückstellachse und sind entweder an der Lenkstange oder einem Übertragungselement festgelegt.

In einer bevorzugten Ausführungsform ist die Betätigungseinheit auf derselben Seite des Achselements angeordnet wie die Lenkstange. Auf diese Weise lässt sich eine besonders kompakte Bauweise der Lenkstabilisierung und somit des Fahrwerks des Nutzfahrzeuges verwirklichen. Indem die Betätigungseinheit möglichst nah an der Lenkstange angeordnet ist, können auch vorzugsweise besonders kurze und damit leichte Streben zum Einsatz gelangen, wodurch das Gewicht und der erforderliche Bauraum der Lenkstabilisierung verringert werden kann. In einer besonders bevorzugten Ausführungsform ist die Betätigungseinheit exakt zwischen der Lenkstange und dem Achselement angeordnet. Auf diese Weise kann sowohl der Befestigungsbereich der Betätigungseinheit an dem Achselement als auch die Streben, welche zwischen den Übertragungselementen der Betätigungseinheit und der Lenkstange vorgesehen sind, so kurz wie möglich ausgelegt sein, wodurch das Gewicht reduziert wird.

In einer bevorzugten Ausführungsform der Lenkstabilisierung weist die Betätigungseinheit eine Kammer auf, in welcher ein Fluid derart angeordnet ist, dass die Betätigungseinheit durch Fluidreibung eine Verlagerung der Lenkstange relativ zum Achselement dämpft. Neben der wesentlichen Aufgabe der Bereitstellung einer Rückstellkraft, welche durch die Betätigungseinheit aufgebracht wird, ist es weiterhin bevorzugt, dass die Betätigungseinheit auch die Verlagerung und somit insbesondere die Verlagerungsbewegung der Lenkstange relativ zum Achselement dämpft. Auf diese Weise können insbesondere bei schneller Geradeausfahrt des Nutzfahrzeuges Schwingungen, die an der Nachlauflenkachse auftreten können, durch die Betätigungseinheit effektiv gedämpft werden. Der Vorteil hierbei ist, dass durch den Einsatz einer erfindungsgemäßen Betätigungseinheit ein zusätzlicher Dämpfer an dem Fahrwerkssystem eingespart werden kann. Um Fluidreibung in der Betätigungseinheit und/oder in an die Betätigungseinheit angrenzenden Fluidleitungen zu erzeugen, sind vorzugsweise Blenden und/oder Ventile vorgesehen, durch welche das Fluid bei Verlagerung der Druckelemente in der Kammer der Betätigungseinheit hindurchgepresst wird, wobei Fluidreibung auftritt und somit kinetische Energie der Lenkstange in Wärme gewandelt wird. Hierdurch findet eine Dämpfung der Verlagerung der Lenkstange statt. Besonders bevorzugt ist eine derartige Blende oder ein Ventil im Bereich des Einlasses vorgesehen, welcher vorzugsweise am Gehäuse der Betätigungseinheit angeordnet ist. Bei einem Lenkausschlag der Lenkstange in die erste oder in die zweite Richtung wird bevorzugt eines der Druckelemente in der Kammer des Gehäuses der Betätigungseinheit verlagert, wodurch sich ein zwischen dem ersten Druckelement und dem zweiten Druckelement angeordnetes erstes Volumen verkleinert, wobei das darin vorgesehene Fluid durch die Einlassöffnung aus dem ersten Volumen ausströmt und dabei die entsprechende Blende oder das entsprechende Ventil passiert, wobei Fluidreibung auftritt. Ist die Kurvenfahrt des Nutzfahrzeuges beendet, presst das Druckluftsystem des Nutzfahrzeuges Fluid in das erste Volumen, wodurch das jeweils zuvor verlagerte Druckelement wieder in seine Ausgangsposition zurückgedrückt wird, wobei während des Einströmens des Fluids durch den Einlass wiederum Fluidreibung auftritt und somit auch die Verlagerung der Lenkachse in die Ruhelage unter Energieverlusten in der Lenkstabilisierung stattfindet, was einer Dämpfung der im System befindlichen potentiellen Druckenergie und kinetischen Energie gleich kommt.

In einer bevorzugten Ausführungsform sind die Streben voneinander beabstandet an der Lenkstange festgelegt, wobei die erste Strebe an einem ersten Übertragungselement der Betätigungseinheit angreift, wobei die zweite Strebe an einem zweiten Übertragungselement der Betätigungseinheit angreift, wobei eine Verlagerung der Lenkstange aus der Ruhelage in eine erste Richtung die zweite Strebe das zweite Übertragungselement in das Gehäuse drückt, wobei bei Verlagerung der Lenkstange aus der Ruhelage in eine zweite Richtung, die erste Strebe das erste Übertragungselement in das Gehäuse drückt. Der Eingriff zwischen dem jeweiligen Übertragungselement und der jeweils an diesem angreifenden Strebe wirkt mit anderen Worten entlang der Rückstellachse bzw. parallel zur Rückstellachse, nur in einer Richtung. Es wird auf diese Weise je nach Richtung des Ausschlags der Lenkstange relativ zum Achselement nur eines der Übertragungselemente in die Betätigungseinheit gedrückt. Dabei wird vorzugsweise nur das Druckelement in Richtung des Rückstellmittels verlagert, welches an dem Übertragungselement festgelegt ist, welches von der Strebe mit einer Kraft beaufschlagt wird. Das andere Druckelement und somit das an diesem angeschlossene jeweils andere Übertragungselement stützen sich während dieses Vorgangs an der Innenwand des Gehäuses der Betätigungseinheit ab. Besonders bevorzugt können die erste Strebe und/oder die zweite Strebe dabei über eine stoffschlüssige Verbindung oder vorzugsweise auch eine kraftschlüssige Verbindung an der Lenkstange festgelegt sein. Der Vorteil einer stoffschlüssigen Verbindung ist die hohe Festigkeit und Verlässlichkeit der Verbindung zwischen Strebe und Lenkstange.

Eine kraftschlüssige Verbindung kann insbesondere dann bevorzugt sein, wenn eine Demontage des Verbundes aus Lenkstange und Strebe verfügbar sein soll.

In einer alternativ bevorzugten Ausführungsform ist die erste Strebe an einem ersten Übertragungselement der Betätigungseinheit festlegbar oder festgelegt, wobei die zweite Strebe an einem zweiten Übertragungselement der Betätigungseinheit festlegbar oder festgelegt ist, wobei die Lenkstange einen ersten lenkerseitigen Eingriffsabschnitt und einen zweiten lenkerseitigen Eingriffsabschnitt aufweist, welche an der Lenkstange festgelegt, oder bevorzugt vorgesehen sind, wobei bei Verlagerung der Lenkstange aus der Ruhelage in eine erste Richtung, der zweite lenkerseitige Eingriffsabschnitt das zweite Übertragungselement über die zweite Strebe in das Gehäuse drückt, wobei bei Verlagerung der Lenkstange aus der Ruhelage in eine zweite Richtung der erste lenkerseitige Eingriffsabschnitt das erste Übertragungselement über die erste Strebe in das Gehäuse drückt. Als Alternative zu der zuvor beschriebenen Ausführungsform können also die Streben auch an den Übertragungselementen der Betätigungseinheit festgelegt sein, wobei an Stelle der an den Übertragungselementen vorgesehenen Eingriffsabschnitt nun lenkerseitige Eingriffsabschnitte an der Lenkstange vorgesehen sind. Der Vorteil dieser Ausführungsform ist, dass die Betätigungseinheit gemeinsam mit den Streben als vormontierte Einheit bereit gestellt werden kann, wobei nach Montage der Betätigungseinheit und der Lenkstange im Fahrwerk des Nutzfahrzeuges die lenkerseitigen Eingriffsabschnitte nachträglich an der Lenkstange festgelegt werden können und an der Lenkstange in der richtigen Position justiert werden können.

Besonders bevorzugt weist die in der Lenkstabilisierung verwendete Betätigungseinheit weitere der zuvor beschriebenen Merkmale von bevorzugten Ausführungsformen der Betätigungseinheit auf.

Weitere Vorteile und Merkmale der vorliegenden Erfindung ergeben sich aus der nachfolgenden Beschreibung bevorzugter Ausführungsformen mit Bezug auf die beigefügten Figuren. Es versteht sich, dass einzelne nur in einer oder einer Auswahl von Ausführungsformen gezeigte Merkmale auch in weiteren Ausführungsformen Verwendung finden könne, insbesondere wenn die Bezugszeichen der Merkmale gleich sind und das Merkmal sich in der entsprechenden Ausführungsform nicht aufgrund technischer Sachverhalte verbietet. Es zeigen:
- Fig.1: eine schematische Ansicht einer bevorzugten Ausführungsform der erfindungsgemäßen Lenkstabilisierung,
- Fig. 2: eine alternativ bevorzugte Ausführungsform der erfindungsgemäßen Lenkstabilisierung,
- Fig.3A: eine teilweise geschnittene Ansicht einer bevorzugten Ausführungsform einer erfindungsgemäßen Lenkstabilisierung in Ruhelage,
- Fig. 3B: eine teilweise geschnittene Ansicht der bevorzugten Ausführungsform aus Fig. 3A in einer ersten ausgelenkten Stellung, und
- Fig. 4A, 4B: eine bevorzugte Ausführungsform der erfindungsgemäßen Betätigungseinheit, wobei Fig. 4A die Ruhelage und Fig. 4B eine erste ausgelenkte Stellung zeigt.

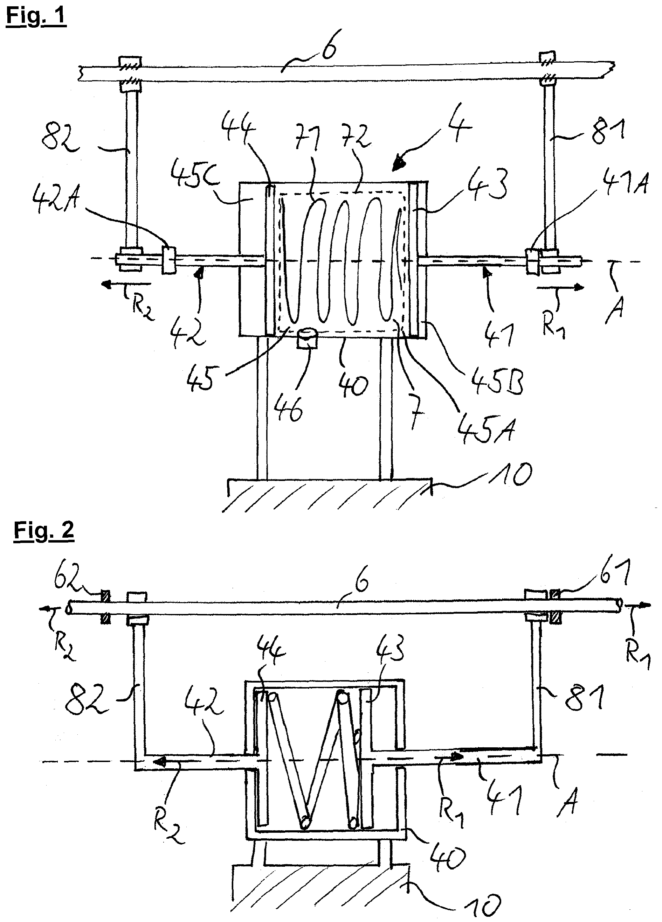

Die in Fig.1 gezeigte Lenkstabilisierung weist eine Lenkstange 6 eine Betätigungseinheit 4 und ein Achselement 10 auf. Die Betätigungseinheit 4 setzt sich aus einem Gehäuse 40, einem ersten Übertragungselement 41, einem zweiten Übertragungselement 42 sowie einem im Inneren des Gehäuses 40 angeordneten Rückstellmittel 7 zusammen. Um eine günstige Kraftübertragung vom Rückstellmittel 7 auf die Übertragungselemente 41, 42 zu ermöglichen, weisen die Übertragungselemente 41, 42 jeweils ein Druckelement 43, 44 auf. Die Druckelemente 43, 44 sind vorzugsweise vollständig innerhalb einer im Gehäuse 40 gebildeten Kammer 45 angeordnet. Dabei teilt das erste Druckelement 43 die Kammer 45 vorzugsweise in ein erstes Volumen 45A und ein zweites Volumen 45B. Analog hierzu teilt das zweite Druckelement 44 die Kammer 45 vorzugsweise in ein drittes Volumen 45C und das erste Volumen 45A. Das erste und das zweite Übertragungselement 41, 42 sind entlang einer Rückstellachse A relativ zum Gehäuse 40 verlagerbar, wobei bei einer Verlagerung des ersten Übertragungselements 41 oder des zweiten Übertragungselements 42 in das Gehäuse 40 hinein das Rückstellmittel 7 jeweils durch die Verengung des ersten Volumens bzw. durch die Verkürzung des Abstands zwischen dem ersten Druckelement 43 und dem zweiten Druckelement 44 komprimiert wird. Diese Komprimierung des Rückstellmittels verursacht eine Rückstellkraft welche vom Rückstellmittel 7 auf die Druckelemente 43, 44 übertragen wird. Aufgrund dieser Rückstellkraft sorgt die Betätigungseinheit 4 dafür das ein Lenkausschlag der Lenkstange 6 relativ zum Achselement 10 nach Beendigung des Lenkvorgangs bzw. der Kurvenfahrt des Nutzfahrzeuges, wieder in eine Ruhelage bzw. Neutralstellung der Lenkstange 6 zurückgeführt wird. Vorzugsweise gelangt als Rückstellmittel 7 ein Federelement 71 und/oder ein Fluid 72 zum Einsatz. Das Fluid 72 ist vorzugsweise Druckluft, da diese besonders einfach bereitzustellen ist und jederzeit aus der Umgebung bzw. aus dem pneumatischen Luftfederungssystem eines Nutzfahrzeuges entnommen werden kann und somit günstig und reproduzierbar zur Verfügung steht. Zur Kopplung des ersten Volumens 45A in der Kammer 45 mit dem Druckluftsystem des Nutzfahrzeuges weist das Gehäuse 40 vorzugsweise einen Einlass 46 auf. An diesem Einlass 46 kann insbesondere bevorzugt über ein Standardgewinde eine Druckluftleitung angeschlossen werden, wobei die Druckluftleitung vorzugsweise mit den Luftfederbälgen und der darin befindlichen Druckluft in Verbindung steht, um abhängig vom Gewicht des Nutzfahrzeuges und des daraus resultierenden höheren oder geringeren Druck in den Luftfedern auch das Fluid 72 mit einem angepassten Druck bereit zu stellen. Das erste Übertragungselement 41 weist einen ersten Eingriffsabschnitt 41A auf, welcher zum einen dafür ausgelegt ist, eine Verlagerung der Lenkstange in einer zweiten Richtung R₂ an das erste Übertragungselement 41 weiter zu leiten und zum anderen die vom Rückstellmittel 7 auf das Übertragungselement 41 wirkende Rückstellkraft wiederum an die Lenkstange 6 zu übertragen. Zur weiteren Kraftübertragung zwischen dem Übertragungselement 41 und der Lenkstange 6 dient weiterhin eine erste Strebe 81, welche in der bevorzugten Ausführungsform von Fig. 1 an der Lenkstange festgelegt ist. Die erste Strebe 81 und die zweite Strebe 82 sowie der erste Eingriffsabschnitt 41A und der zweite Eingriffsabschnitt 42A sind dabei derart an der Lenkstange und den Übertragungselementen 41, 42 positioniert, dass bei Verlagerung der Lenkstange 6 in die erste Richtung R₁ oder in die zweite Richtung R₂ jeweils ein Übertragungselement 41, oder 42 in das Gehäuse 40 der Betätigungseinheit 4 hineingedrückt wird, während das jeweils andere Übertragungselement 41, 42 der jeweiligen Strebe 81, 82 eine freie Bewegung in der Richtung erlaubt, in welcher sich die Lenkstange 6 relativ zum Achselement 10 bewegt.

Fig. 2 zeigt eine weitere Ausführungsform der Lenkstabilisierung, wobei im Unterschied zu der im Fig. 1 gezeigten Ausführungsform die Streben 81, 82 nicht an der Lenkstange 6 festgelegt sind, sondern an den Übertragungselementen 41, 42. Zur Kraftübertragung von den Übertragungselementen 41, 42 auf die Lenkstange 6 und umgekehrt weist die Lenkstange einen ersten lenkerseitigen Eingriffsabschnitt 61 und einen zweiten lenkerseitigen Eingriffsabschnitt 62 auf, welche ähnlich zu den Eingriffsabschnitten 41A und 42A in Fig. 1 dafür ausgelegt sind, eine Kraft der Betätigungseinheit 4 an die Lenkstange 6 und umgekehrt zu übertragen.

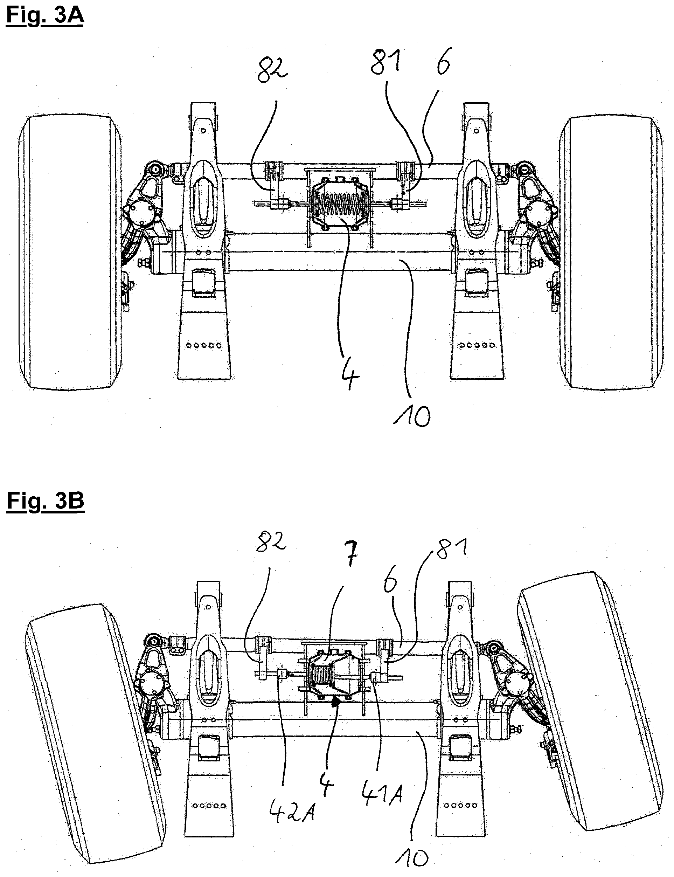

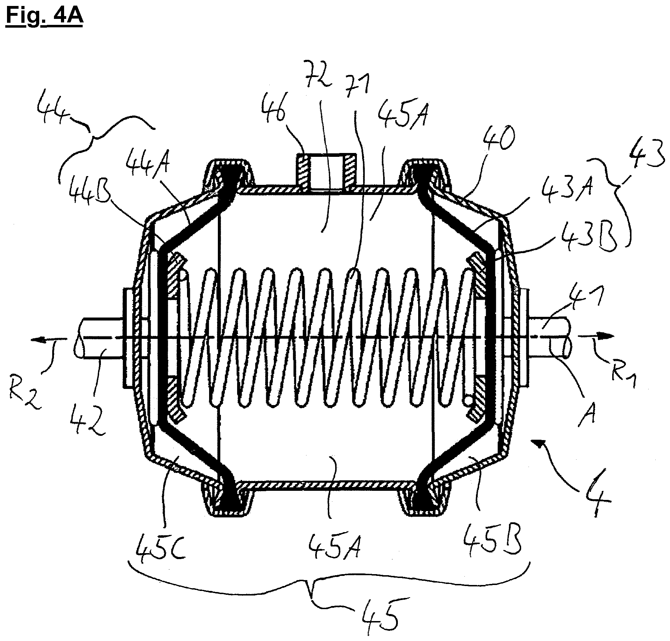

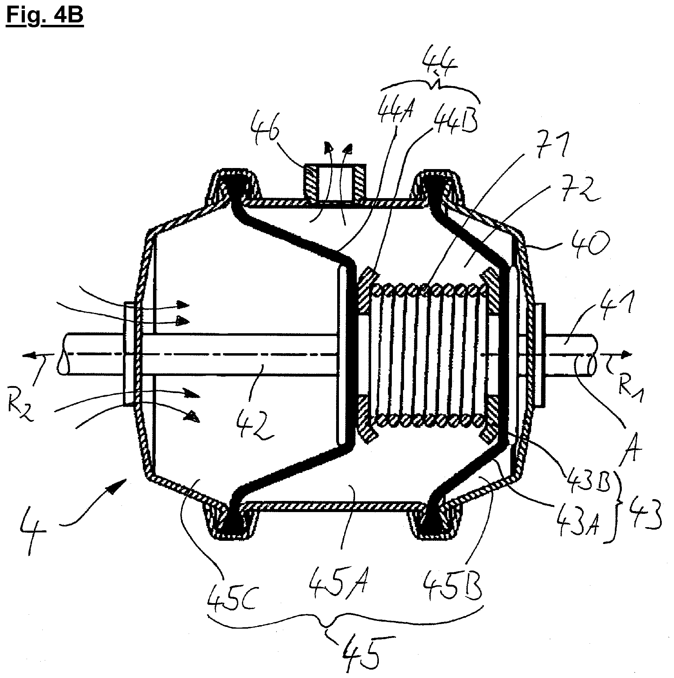

Fig. 3A zeigt eine teilweise geschnittene Draufsicht auf eine bevorzugte Ausführungsform der Lenkstabilisierung mit den benachbarten Elementen und Systemen des Nutzfahrzeugfahrwerkes. Bei der dargestellten Nachlauflenkachse verläuft die Geradeausfahrtrichtung in der Figur nach oben. Fig. 3A zeigt dabei die Ruhestellung, das heißt die Stellung der Lenkstange 6 bei Geradeausfahrt, während Fig. 3B die Stellung der Lenkstabilisierung bei Kurvenfahrt zeigt. Bei der in Fig. 3A gezeigten Geradeausfahrstellung der Betätigungseinheit und der Lenkstange 6 werden die erste Strebe 81 und die zweite Strebe 82 vorzugsweise von den Übertragungselementen 41, 42 (siehe Fig. 1 oder Fig. 4A) der Betätigungseinheit 4 mit der gleichen Kraft beaufschlagt, wodurch die Lenkachse und somit auch die Räder des Nutzfahrzeuges in Geradeausfahrstellung gehalten werden. Bei der in Fig. 3B gezeigten Stellung der Lenkstabilisierung bei Kurvenfahrt greift nur die erste Strebe 81 an dem entsprechenden ersten Eingriffsabschnitt 41A des ersten Übertragungselements 41 an, während die zweite Strebe 82 sich in ihrem Freilauf entlang des zweiten Übertragungselements 42 von dem zweiten Eingriffsabschnitt 42A entfernt. Gleichzeitig wird in der Kammer der Betätigungseinheit 4 das Rückstellmittel 7 entsprechend nach links verschoben und mit einer Kraft beaufschlagt, wobei dieses mit einer Rückstellkraft auf das erste Übertragungselement 41 und somit auf die erste Strebe 81 einwirkt. Die Details der Betätigungseinheit 4 in Neutralstellung bzw. Geradeausfahrtstellung sowie in Kurvenstellung sind in den Figuren 4A und 4B gezeigt. Bei der in Fig. 3A und Fig. 3B gezeigten Ausführungsform ist das erste Übertragungselement 41 und das zweite Übertragungselement 42 vorzugsweise zumindest im Bereich, in welchem der erste Eingriffsabschnitt 41A oder der zweite Eingriffsabschnitt 42A angreift, als Gewindestange ausgeführt, wobei der erste Eingriffsabschnitt 41A sowie der zweite Eingriffsabschnitt 42A vorzugsweise ein Innengewinde aufweist, welches auf das Übertragungselement 41 aufgeschraubt werden kann und in einer bestimmten Position gesichert, beispielsweise gekontert, werden kann. Auf diese Weise lässt sich mittels weniger Handgriffe die Betätigungseinheit 4 und ihr Eingriff an der Lenkstange 6 justieren.

Fig. 4A zeigt die Betätigungseinheit 4 in der bereits in Fig. 3A gezeigten Geradeausfahrstellung. Als weitere Details der Betätigungseinheit 4 ist gezeigt, dass die Druckelemente 43 und 44 eine erste und eine zweite Membran 43A, 44A und vorzugsweise auch einen ersten und einen zweiten Stützabschnitt 43A und 44A, aufweisen. Die erste Membran 43A dient dabei der Unterteilung der Kammer 45 im Gehäuse 40 der Betätigungseinheit 4 in ein erstes Volumen 45A und ein zweites Volumen 45B. Der erste Stützabschnitt 43B dient zur Abstützung des Federelements 71, wobei er einen kragenförmigen Rand aufweist, welcher verhindert, dass das Federelement 71 quer zur Rückstellachse A verrutscht. Analog hierzu weist das zweite Druckelement 44 eine zweite Membran 44A auf, welche ein drittes Volumen 45C vom ersten Volumen 45A trennt. Besonders bevorzugt ist das erste Volumen 45A über den Einlass 46 fluidtechnisch mit dem Druckluftsystem des Nutzfahrzeuges verbunden. Insbesondere bevorzugt herrscht dabei im ersten Volumen 45A ein größerer Druck als im zweiten Volumen 45B und als im dritten Volumen 45C. Der Überdruck im ersten Volumen 45A sowie das Federelement 71 beaufschlagen dabei sowohl das erste Druckelement 43 als auch das zweite Druckelement 44 mit einer Kraft welche versucht, beide Druckelemente 43, 44 von einander zu beabstanden. In der Geradeausfahrstellung der Betätigungseinheit 4 stützen sich das erste Druckelement 43 und das zweite Druckelement 44 jeweils an den Stirnseiten, das heißt mit anderen Worten an den rechts und links in der Figur gezeigten Innenwände des Gehäuses 40 der Betätigungseinheit 4 ab. Mit anderen Worten beaufschlagt das Rückstellmittel 7, welches in der in Fig. 4A gezeigten Ausführungsform vorzugsweise ein Federelement 71 und ein Fluid 72 umfasst, das erste Druckelement 43 in einer ersten Richtung R₁ und das zweite Druckelement 44 in einer zweiten Richtung R₂ Im Übergangsbereich zu dem stangenförmigen Bereich des ersten bzw. zweiten Übertragungselements 41, 42 weist dabei das erste Druckelement 43 sowie das zweite Druckelement 44 jeweils einen plattenförmigen Abschnitt auf, welcher insbesondere die Membran 43A, 44A abstützt. Die erste Membran 43A sowie die zweite Membran 44A sind vorzugsweise aus einem Gummimaterial hergestellt. Insbesondere bevorzugt kann hierbei auch ein faserverstärktes Gummimaterial zum Einsatz gelangen, um die in der Betätigungseinheit 4 wirkenden hohen Kräfte aufnehmen zu können.

Fig. 4B zeigt die Betätigungseinheit im Zustand in welchem die Lenkstange 6 in einer ausgelenkten Stellung relativ zum Achselement 10 (nicht gezeigt) steht, wobei das zweite Übertragungselement 42 entlang der Rückstellachse A in die Kammer 45 der Betätigungseinheit 4 hineingedrückt ist. Schematisch dargestellt ist dabei, dass zum einen in das dritte Volumen 45C Umgebungsluft einströmt, um den durch das Verschieben des zweiten Druckelements 44 vergrößerten Raum zu füllen. Zum anderen verkleinert sich der Raum des ersten Volumens 45A, wobei die dort befindliche Druckluft durch die Einlassöffnung 46 in das Druckluftsystem des Nutzfahrzeuges entweicht und das Federelement 71 zwischen dem ersten Druckelement 43 und dem zweiten Druckelement 44 komprimiert wird. In dem in Fig. 4B gezeigten Zustand stützt sich das erste Druckelement 43 an der in der Figur rechten Seite des Gehäuses 40 der Betätigungseinheit 4 ab. Sobald die Rückstellkraft des Rückstellmittels 7 die auf das zweite Übertragungselement 42 von der Lenkstange übertragene Kraft überwiegt, verlagert sich das zweite Übertragungselement 42 wieder in die in der Figur linke Richtung, bis schließlich die in Fig. 4A gezeigte Ruhelage der Betätigungseinheit erreicht ist. An Stelle der in den Figuren 3A, 3B, 4A und 4B gezeigten Membranen 43A und 44A, könnten die Druckelemente auch als einfache Kolben ausgebildet sein, die im Inneren der Kammer 45 der Betätigungseinheit 4 gleiten und entsprechend das erste Volumen 45A begrenzen.

### Bezugszeichenliste:

- 4: - Betätigungseinheit
- 6: - Lenkstange
- 7: - Rückstellmittel
- 10: - Achselement
- 40: - Gehäuse
- 41: - erstes Übertragungselement
- 41A: - erster Eingriffsabschnitt
- 42: - zweites Übertragungselement
- 42A: - zweiter Eingriffsabschnitt
- 43: - erstes Druckelement
- 43 A: - erste Membran
- 43 B: - erster Stützabschnitt
- 44: - zweites Druckelement
- 44 A: - zweite Membran
- 44 B: - zweiter Stützabschnitt
- 45: - Kammer
- 45A: - erstes Volumen
- 45B: - zweites Volumen
- 45C: - drittes Volumen
- 46: - Einlass
- 61: - erster lenkseitiger Eingriffsabschnitt
- 62: - zweiter lenkseitiger Eingriffsabschnitt
- 71: - Federelement
- 72: - Fluid
- 81: - erste Strebe
- 82: - zweite Strebe
- A: - Rückstellachse
- R₁: - erste Richtung
- R₂: - zweite Richtung

## Patentansprüche

1. Betätigungseinheit (4) zum Einsatz in einer Lenkstabilisierung, umfassend ein Gehäuse (40), ein erstes Übertragungselement (41) und ein zweites Übertragungselement (42),
wobei das erste Übertragungselement (41) und das zweite Übertragungselement (42) von außen in das Gehäuse (40) hineinragen und entlang einer Rückstellachse (A) verlagerbar sind,
wobei das erste Übertragungselement (41) an seinem ersten Ende an einem ersten Druckelement (43) angreift und wobei das zweite Übertragungselement (42) an seinem ersten Ende an einem zweiten Druckelement (44) angreift, **dadurch gekennzeichnet, dass** das erste Druckelement (43) und das zweite Druckelement (44) vollständig im Inneren des Gehäuses (40) angeordnet sind und von einem Rückstellmittel (7) mit einer entlang der Rückstellachse (A) wirkenden Rückstellkraft (F) beaufschlagt sind.

2. Betätigungseinheit (4) nach Anspruch 1,
wobei das Rückstellmittel (7) unter Vorspannung steht um das erste Druckelement (43) vom zweiten Druckelement (44) zu beabstanden,
wobei sich zumindest eines der Übertragungselemente (41, 42) und/oder Druckelemente (43, 44) an dem Gehäuse (40) und/oder einem im Wesentlichen ortsfest zum Gehäuse (40) angeordneten Anschlag abstützt.

3. Betätigungseinheit (4) nach einem der vorhergehenden Ansprüche,
wobei das Rückstellmittel (7) ein Federelement (71) und/oder ein Fluid (72) umfasst.

4. Betätigungseinheit (4) nach einem der vorhergehenden Ansprüche,
wobei das erste Übertragungselement (41) einen ersten Eingriffsabschnitt (41A) aufweist, welcher außerhalb des Gehäuses (4) angeordnet und ausgelegt ist, eine Kraft an eine Lenkstange (6) entlang der Rückstellachse (A) in einer ersten Richtung (R₁) zu übertragen,
wobei das zweite Übertragungselement (42) einen zweiten Eingriffsabschnitt (42A) aufweist, welcher außerhalb des Gehäuses (4) angeordnet und ausgelegt ist, eine Kraft an die Lenkstange (6) entlang der Rückstellachse (A) in einer zweiten Richtung (R₂) zu übertragen.

5. Betätigungseinheit (4) nach Anspruch 4,
wobei der erste Eingriffsabschnitt (41A) ausgelegt ist entgegen der ersten Richtung (R₁) keine Kraft an die Lenkstange (6) zu übertragen, und/oder wobei der zweite Eingriffsabschnitt (42A) ausgelegt ist entgegen der zweiten Richtung (R₂) keine Kraft an die Lenkstange (6) zu übertragen.

6. Betätigungseinheit (4) nach einem der Ansprüche 4 oder 5,
wobei die Position des ersten und/oder des zweiten Eingriffsabschnitts (41A, 42A) an dem jeweiligen Übertragungselement (41, 42) einstellbar und vorzugsweise form- und/oder kraftschlüssig festlegbar ist.

7. Betätigungseinheit (4) nach einem der vorhergehenden Ansprüche,
wobei im Gehäuse (40) eine Kammer (45) gebildet ist,
wobei das erste Druckelement (43) die Kammer (45) in ein erstes Volumen (45A) und ein zweites Volumen (45B) teilt,
und
wobei das zweite Druckelement (44) die Kammer (45) in das erste Volumen (45A) und ein drittes Volumen (45C) teilt.

8. Betätigungseinheit (4) nach Anspruch 7,
wobei im Betrieb der Betätigungseinheit (4) im ersten Volumen (45A) ein höherer Druck herrscht als im zweiten Volumen (45B) und im dritten Volumen (45C).

9. Betätigungseinheit (4) nach Anspruch 7 oder 8,
wobei im Betrieb der Betätigungseinheit (4) im zweiten Volumen (45B) und/oder im dritten Volumen (45C) Umgebungsluftdruck herrscht.

10. Betätigungseinheit (4) nach einem der Ansprüche 7 bis 9,
wobei das erste Druckelement (43) eine erste Membran (43A) und/oder das zweite Druckelement (44) eine zweite Membran (44A) umfasst,
wobei die erste Membran (43A) und/oder die zweite Membran (44A) fluiddicht an der Innenwand der Kammer (45) des Gehäuses (40) angeordnet ist/sind.

11. Betätigungseinheit (4) nach einem der vorhergehenden Ansprüche,
wobei das erste Druckelement (43) und das zweite Druckelement (44) einen Stützabschnitt (43B, 44B) aufweisen,
wobei sich das vorzugsweise als Federelement (71) ausgebildete Rückstellmittel (7) an beiden Stützabschnitten (43B, 44B) abstützt.

12. Lenkstabilisierung, insbesondere für ein Nutzfahrzeug, umfassend eine Betätigungseinheit (4), eine Lenkstange (6) und zwei Streben (81, 82),
wobei die Betätigungseinheit (4) ein Gehäuse (40) aufweist, welches ortsfest zu einem Achselement (10) angeordnet ist,
wobei die Betätigungseinheit (4) ausgelegt ist, in einer Ruhelage der Lenkstange (6) relativ zum Achselement (10) beide Streben (81, 82) mit dem gleichen Betrag einer Kraft zu beaufschlagen,
wobei die erste Strebe (81) dafür ausgelegt ist, eine Rückstellkraft von der Betätigungseinheit (4) an die Lenkstange (6) in einer ersten Richtung (R₁) parallel zu einer Rückstellachse (A) zu übertragen und die zweite Strebe (82) dafür ausgelegt ist, eine Rückstellkraft von der Betätigungseinheit (4) an die Lenkstange (6) entlang einer zweiten Richtung (R₂) zu übertragen,
**dadurch gekennzeichnet, dass** die Betätigungseinheit (4) ausgelegt ist, bei Auslenkung der Lenkstange (6) aus der Ruhelage parallel zu der Rückstellachse (A) auf eine der Streben (81, 82) eine höhere Kraft zu übertragen als auf die jeweils andere Strebe (81, 82).

13. Lenkstabilisierung nach Anspruch 12,
wobei die Betätigungseinheit (4) auf derselben Seite des Achselements (10) angeordnet ist, wie die Lenkstange (6).

14. Lenkstabilisierung nach einem der Ansprüche 12 oder 13,
wobei die Betätigungseinheit (4) eine Kammer (45) aufweist, in welcher ein Fluid (72) derart angeordnet ist, dass die Betätigungseinheit (4) durch Fluidreibung eine Verlagerung der Lenkstange (6) relativ zum Achselement (10) dämpft.

15. Lenkstabilisierung nach einem der Ansprüche 12 bis 14,
wobei die Streben (81,82) voneinander beabstandet an der Lenkstange (6) festgelegt sind,
wobei die erste Strebe (81) an einem ersten Übertragungselement (41) der Betätigungseinheit (4) angreift,
wobei die zweite Strebe (82) an einem zweiten Übertragungselement (42) der Betätigungseinheit (4) angreift,
wobei bei Verlagerung der Lenkstange (6) aus der Ruhelage in eine erste Richtung (R₁), die zweite Strebe (82) das zweite Übertragungselement (42) in das Gehäuse (40) drückt,
wobei bei Verlagerung der Lenkstange (6) aus der Ruhelage in eine zweite Richtung (R₂), die erste Strebe (81) das erste Übertragungselement (41) in das Gehäuse (40) drückt.

## Claims

1. An actuating unit (4) for use in a steering stabilizing means comprising a housing (40), a first transmission element (41) and a second transmission element (42),
wherein the first transmission element (41) and the second transmission element (42) project into the housing (40) from the outside and are displaceable along a restoring axis (A),
wherein the first transmission element (41) engages at its first end with a first pressure element (43) and wherein the second transmission element (42) engages at its first end with a second pressure element (44), **characterised in that** the first pressure element (43) and the second pressure element (44) are arranged completely inside the housing (40) and are subjected by a restoring means (7) to a restoring force (F) acting along the restoring axis (A).

2. The actuating unit (4) according to claim 1,
wherein the restoring means (7) is under a preload in order to space the first pressure element (43) apart from the second pressure element (44), wherein at least one of the transmission elements (41, 42) and/or pressure elements (43, 44) is supported on the housing (40) and/or a stop arranged substantially stationary relative to the housing (40).

3. The actuating unit (4) according to any one of the preceding claims,
wherein the restoring means (7) comprises a spring element (71) and/or a fluid (72).

4. The actuating unit (4) according to any one of the preceding claims,
wherein said first transmission element (41) has a first engaging portion (41A) disposed outside said housing (4) and adapted to transmit a force to a steering rod (6) along said restoring axis (A) in a first direction (R₁),
wherein said second transmission element (42) has a second engaging portion (42A) disposed outside said housing (4) and adapted to transmit a force to said steering rod (6) along said restoring axis (A) in a second direction (R₂).

5. The actuating unit (4) according to claim 4,
wherein said first engaging portion (41A) is adapted to transmit no force to said steering rod (6) in a direction opposite to said first direction (R₁), and/or wherein the second engaging portion (42A) is adapted to transmit no force to the steering rod (6) against the second direction (R₂).

6. The actuating unit (4) according to one of claims 4 or 5,
wherein the position of the first and/or the second engagement portion (41A, 42A) can be adjusted on the respective transmission element (41, 42) and preferably fixed in a positive and/or non-positive manner.

7. The actuation unit (4) according to any one of the preceding claims,
wherein a chamber (45) is formed in the housing (40),
the first pressure element (43) dividing the chamber (45) into a first volume (45A) and a second volume (45B),
and
the second pressure element (44) dividing the chamber (45) into the first volume (45A) and a third volume (45C).

8. The actuating unit (4) according to claim 7,
wherein during operation of the actuating unit (4), a higher pressure prevails in the first volume (45A) than in the second volume (45B) and in the third volume (45C).

9. The actuating unit (4) according to claim 7 or 8,
wherein during operation of the actuating unit (4) ambient air pressure prevails in the second volume (45B) and/or in the third volume (45C).

10. The actuating unit (4) according to one of claims 7 to 9,
wherein the first pressure element (43) comprises a first membrane (43A) and/or the second pressure element (44) comprises a second membrane (44A),
wherein the first membrane (43A) and/or the second membrane (44A) is/are fluid-tightly arranged on the inner wall of the chamber (45) of the housing (40).

11. The actuating unit (4) according to any one of the preceding claims,
wherein the first pressure element (43) and the second pressure element (44) have a support section (43B, 44B),
wherein the restoring means (7), preferably in the form of a spring element (71), is supported on both support sections (43B, 44B).

12. A steering stabilizing means, in particular for a utility vehicle, comprising an actuating unit (4), a steering rod (6) and two struts (81, 82),
wherein the actuating unit (4) has a housing (40) which is arranged in a fixed position relative to an axle member (10),
wherein the actuating unit (4) is adapted to apply the same amount of force to both struts (81, 82) in a rest position of the steering rod (6) relative to the axle member (10),
wherein the first strut (81) is adapted to transmit a restoring force from the actuating unit (4) to the steering rod (6) in a first direction (R₁) parallel to the restoring axis and the second strut (82) is adapted to transmit a restoring force from the actuating unit (4) to the steering rod (6) along a second direction (R₂), **characterised in that** the actuating unit (4) is adapted to transmit a higher force to one of the struts (81, 82) than to the respective other strut (81, 82) when the steering rod (6) is deflected from the rest position parallel to a restoring axis (A).

13. The steering stabilizing means according to claim 12,
wherein the actuating unit (4) is arranged on the same side of the axle member (10) as the steering rod (6).

14. The steering stabilizing means according to one of claims 12 or 13,
wherein the actuating unit (4) has a chamber (45) in which a fluid (72) is arranged in such a way that the actuating unit (4) dampens a displacement of the steering rod (6) relative to the axle member (10) by fluid friction.

15. The steering stabilizing means according to one of claims 12 to 14,
wherein the struts (81, 82) are fixed to the steering rod (6) at a distance from one another,
wherein the first strut (81) engages a first transmission element (41) of the actuating unit (4),
wherein the second strut (82) engages a second transmission element (42) of the actuating unit (4),
wherein when the steering rod (6) is displaced from the rest position in a first direction (R₁), the second strut (82) presses the second transmission element (42) into the housing (40),
wherein when the steering rod (6) is displaced from the rest position in a second direction (R₂), the first strut (81) presses the first transmission element (41) into the housing (40).

## Revendications

1. Unité d'actionnement (4) destinée à être utilisée dans un stabilisateur de direction, comprenant un boîtier (40), un premier élément de transmission (41) et un second élément de transmission (42),
dans laquelle
le premier élément de transmission (41) et le second élément de transmission (42) pénètrent dans le boîtier (40) depuis l'extérieur et sont déplaçables le long d'un axe de rappel (A),
le premier élément de transmission (41) attaque par sa première extrémité un premier élément de pression (43) et le second élément de transmission (42) attaque par sa première extrémité un second élément de pression (44),
**caractérisée en ce que**
le premier élément de pression (43) et le second élément de pression (44) sont disposés entièrement à l'intérieur du boîtier (40) et sont sollicités par un moyen de rappel (7) avec une force de rappel (F) agissant le long de l'axe de rappel (A).

2. Unité d'actionnement (4) selon la revendication 1,
dans laquelle
le moyen de rappel (7) est sous précontrainte pour écarter le premier élément de pression (43) du second élément de pression (44),
l'un au moins des éléments de transmission (41, 42) et/ou des éléments de pression (43, 44) prenant appui contre le boîtier (40) et/ou contre une butée disposée de façon sensiblement stationnaire par rapport au boîtier (40).

3. Unité d'actionnement (4) selon l'une des revendications précédentes, dans laquelle
le moyen de rappel (7) comprend un élément à ressort (71) et/ou un fluide (72).

4. Unité d'actionnement (4) selon l'une des revendications précédentes, dans laquelle
le premier élément de transmission (41) comprend une première portion d'engagement (41A) qui est disposée à l'extérieur du boîtier (4) et qui est conçue pour transmettre une force à une barre de direction (6) le long de l'axe de rappel (A) dans une première direction (R₁), et
le second élément de transmission (42) comprend une seconde portion d'engagement (42A) qui est disposée à l'extérieur du boîtier (4) et qui est conçue pour transmettre une force à la barre de direction (6) le long de l'axe de rappel (A) dans une seconde direction (R₂).

5. Unité d'actionnement (4) selon la revendication 4,
dans laquelle
la première portion d'engagement (41A) est conçue pour ne pas transmettre de force à la barre de direction (6) en sens opposé à la première direction (R₁), et/ou
la seconde portion d'engagement (42A) est conçue pour ne pas transmettre de force à la barre de direction (6) en sens opposé à la seconde direction (R₂).

6. Unité d'actionnement (4) selon l'une des revendications 4 ou 5,
dans laquelle
la position de la première et/ou de la seconde portion d'engagement (41A, 42A) sur l'élément de transmission respectif (41, 42) est réglable et de préférence immobilisable par coopération de forme et/ou de force.

7. Unité d'actionnement (4) selon l'une des revendications précédentes, dans laquelle
une chambre (45) est formée dans le boîtier (40),
le premier élément de pression (43) subdivise la chambre (45) en un premier volume (45A) et en un second volume (45B),
et
le second élément de pression (44) subdivise la chambre (45) en le premier volume (45A) et en un troisième volume (45C).

8. Unité d'actionnement (4) selon la revendication 7,
dans laquelle
lors du fonctionnement de l'unité d'actionnement (4), une pression règne dans le premier volume (45A) qui est supérieure à celle dans le second volume (45B) et dans le troisième volume (45C).

9. Unité d'actionnement (4) selon la revendication 7 ou 8,
dans laquelle
lors du fonctionnement de l'unité d'actionnement (4), une pression d'air atmosphérique règne dans le second volume (45B) et/ou dans le troisième volume (45C).

10. Unité d'actionnement (4) selon l'une des revendications 7 à 9,
dans laquelle
le premier élément de pression (43) comprend une première membrane (43A) et/ou le second élément de pression (44) comprend une seconde membrane (44A),
la première membrane (43A) et/ou la seconde membrane (44A) est/sont disposée(s) de façon étanche aux fluides contre la paroi intérieure de la chambre (45) du boîtier (40).

11. Unité d'actionnement (4) selon l'une des revendications précédentes, dans laquelle
le premier élément de pression (43) et le second élément de pression (44) comprennent une portion d'appui (43B, 44B), et
le moyen de rappel (7) réalisé de préférence sous forme d'élément à ressort (71) prend appui contre les deux portions d'appui (43B, 44B).

12. Stabilisateur de direction, en particulier pour un véhicule utilitaire, comportant une unité d'actionnement (4), une barre de direction (6) et deux entretoises (81, 82),
dans lequel
l'unité d'actionnement (4) comprend un boîtier (40) qui est disposé de façon stationnaire par rapport à un élément d'essieu (10),
l'unité d'actionnement (4) est conçue pour solliciter les deux entretoises (81, 82) par une force de même intensité, dans une position de repos de la barre de direction (6) par rapport à l'élément d'essieu (10),
la première entretoise (81) est conçue pour transmettre une force de rappel de l'unité d'actionnement (4) à la barre de direction (6) dans une première direction (R₁) parallèle à un axe de rappel (A), et la seconde entretoise (82) est conçue pour transmettre une force de rappel de l'unité d'actionnement (4) à la barre de direction (6) le long d'une seconde direction (R₂), **caractérisé en ce que**
l'unité d'actionnement (4) est conçue pour transmettre une force à l'une des entretoises (81, 82) qui est supérieure à celle transmise à l'autre entretoise respective (81, 82) lors d'un débattement de la barre de direction (6) hors de la position de repos parallèlement à l'axe de rappel (A).

13. Stabilisateur de direction selon la revendication 12,
dans lequel
l'unité d'actionnement (4) est disposée sur le même côté de l'élément d'essieu (10) que la barre de direction (6).

14. Stabilisateur de direction selon l'une des revendications 12 ou 13, dans lequel
l'unité d'actionnement (4) comprend une chambre (45) dans laquelle est disposé un fluide (72) de telle sorte que l'unité d'actionnement (4) amortit par friction fluidique un déplacement de la barre de direction (6) par rapport à l'élément d'essieu (10).

15. Stabilisateur de direction selon l'une des revendications 12 à 14,
dans lequel
les entretoises (81, 82) sont immobilisées à distance l'une de l'autre sur la barre de direction (6),
la première entretoise (81) attaque un premier élément de transmission (41) de l'unité d'actionnement (4),
la seconde entretoise (82) attaque un second élément de transmission (42) de l'unité d'actionnement (4),
lors d'un déplacement de la barre de direction (6) hors de la position de repos dans une première direction (R₁), la seconde entretoise (82) pousse le second élément de transmission (42) dans le boîtier (40), et
lors d'un déplacement de la barre de direction (6) hors de la position de repos dans une seconde direction (R₂), la première entretoise (81) pousse le premier élément de transmission (41) dans le boîtier (40).
